# EUROPÄISCHE PATENTSCHRIFT

(11) **EP 2 392 127 B1**
(45) Veröffentlichungstag und Bekanntmachung des Hinweises auf die Patenterteilung: **06.03.2013**
(21) Anmeldenummer: 10760258.3
(22) Anmeldetag: 17.09.2010
(51) Int. Cl.: H04M 3/48, H04M 3/54

(54) **VERFAHREN ZUR EINRICHTUNG UND VERWALTUNG EINER ANBINDUNG EINES MOBILEN KOMMUNIKATIONSENDGERÄTES AN EINE NEBENSTELLENANLAGE**
METHOD FOR ESTABLISHING AND MANAGING A CONNECTION OF A MOBILE COMMUNICATION TERMINAL TO A PRIVATE BRANCH EXCHANGE
PROCÉDÉ POUR ÉTABLIR ET GÉRER UNE CONNEXION D'UN TERMINAL DE COMMUNICATION MOBILE À UN AUTOCOMMUTATEUR PRIVÉ

(30) Priorität: 24.09.2009 DE 102009042949
(43) Veröffentlichungstag der Anmeldung: 07.12.2011
(73) Patentinhaber: Siemens Enterprise Communications GmbH & Co. KG, 81379 München (DE)
(72) Erfinder: KRETSCHMER, Sabine, 45276 Essen (DE)
(74) Vertreter: Fritzsche, Thomas
(86) Internationale Anmeldenummer: PCT/EP2010/005731
(87) Internationale Veröffentlichungsnummer: WO 2011/035872

(56) Entgegenhaltungen:
- DE-A1- 10 149 720
- "3rd Generation Partnership Project; Technical Specification Group Core Network and Terminals; Completion of Communications to Busy Subscriber (CCBS) Completion of Communications by No Reply (CCNR) using IP Multimedia (IM) Core Network (CN) subsystem; Protocol specification; (Release 9)", 3GPP STANDARD; 3GPP TS 24.642, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V9.0.0, 1. September 2009 (2009-09-01) , Seiten 1-44, XP050365639,

## Beschreibung

Die Anwender moderner Nebenstellenanlagen gehen zunehmend davon aus, zu jeder Zeit erreichbar sein zu müssen, auch dann, wenn sie sich gerade nicht an ihrem Arbeitsplatz befinden. Nebenstellenanlagen weisen in der Regel eine Mehrzahl Interner Kommunikationsendgeräte auf, die häufig als Festnetzendgeräte ausgebildet sind. Will ein Teilnehmer auch dann noch erreichbar sein, wenn er sich gerade nicht In der Nähe seines internen Kommunikationsendgerätes befindet, richtet er häufig eine Anrufweiterschaltung zu einem mobilen Kommunikationsendgerät ein, welches in aller Regel nicht zu den internen Kommunikationsendgeräten der Nebenstellenanlage zählt. Die DE 101 49 720 A1 beschreibt ein Verfahren zur Aktivierung einer solchen Rufumleitung.

In anderen Fällen möchte ein Teilnehmer einer Nebenstellenanlage auch dann erreichbar sein, wenn er sich an einem stationären Kommunikationsendgerät, beispielsweise in der Nähe seines privaten Festnetzanschlusses, aufhält, welches ebenfalls nicht ein internes Kommunikationsendgerät der Nebenstellenanlage ist. In diesem und ähnlichen Fällen stellt sich das Problem der Anbindung eines externen Kommunikationsgerätes an eine Nebenstellenanlage, die aus Sicht des jeweiligen Teilnehmers nach Möglichkeit so einfach wie möglich eingerichtet und verwaltet werden können soll. Zur Verwaltung einer solchen Anbindung gehört dabei insbesondere die vorübergehende Aktivierung und Deaktivierung von Rufweiterschaltungen zu verschiedenen externen Kommunikationsendgeräten.

Der vorliegenden Erfindung liegt die Aufgabe zugrunde, eine Lösung zur möglichst effizienten und einfachen Einrichtung und Verwaltung einer Anbindung eines externen Kommunikationsendgerätes an eine Nebenstellenanlage anzugeben. Diese Aufgabe wird durch ein Verfahren oder ein Erzeugnis nach einem der unabhängigen Patentansprüche gelöst.

Erfindungsgemäß sind ein Verfahren bzw. eine Nebenstellenanlage vorgesehen, bei denen ein internes Kommunikationsendgerät der Nebenstellenanlage über mindestens eine Einrichtung verfügt, durch deren Aktivierung dieses interne Kommunikationsendgerät oder die Nebenstellenanlage in einen Zustand versetzt wird, in welchem dieses interne Kommunikationsendgerät oder die Nebenstellenanlage die Rufnummer eines von einem externen Kommunikationsendgerät ankommenden Anrufs identifiziert. Die identifizierte Rufnummer des externen Kommunikationsendgerätes wird daraufhin in einer Datenbank mit dem internen Kommunikationsendgerät assoziiert, sofern die mit der Aktivierung dieser Einrichtung verbundene Art der Assoziation dieses externen Kommunikationsendgeräts mit diesem internen Kommunikationsendgerät in der Datenbank noch nicht eingetragen ist. Anderenfalls wird diese Assoziation gelöscht.

Unter einer Nebenstellenanlage oder Telefonanlage soll dabei im Zusammenhang mit der Beschreibung vorliegender Erfindung jede Form der Vermittlungseinrichtung verstanden werden, die mehrere Endgeräte (d.h. Kommunikationsendgeräte) wie z. B. Telefon, Fax, Anrufbeantworter oder ähnliche Kommunikationsendgeräte sowohl untereinander als auch mit dem öffentlichen Telefonnetz verbindet. Ein grundsätzlicher Funktionsbestandteil zum Erfüllen dieser Aufgabe ist beispielsweise ein sog. Koppelfeld dessen Ein- und Ausgangskanäle durch ein Steuerwerk geschaltet werden. Der Anschluss einer Nebenstellenanlage oder Telefonanlage an das öffentliche Telefonnetz kann dabei über verschiedene Techniken, wie z. B. über einen klassischen analogen Telefonanschluss, über eine ISDN-Leitung oder auch auf der Grundlage des Internetprotokolls (im Fall von auf dem Internetprotokoll basierender Kommunikationsnetze) erfolgen. Letztere ermöglichen insbesondere die Konvergenz von Informations- und Telekommunikations-Technologie.

In diesem Zusammenhang entwickeln sich Telefonanlagen zunehmend mehr in Richtung rein Software-basierter Systeme, die auf bereits standardisierten und kommerziell erhältlichen Komponenten aufbauen.

Für die internen Kommunikationsendgeräte verwendet eine Nebenstellenanlage insbesondere digitale und/oder analoge Anschlussmöglichkeiten, sog. Ports. Interne Kommunikationsendgeräte können, je nach Typ der Nebenstellenanlage, kabelgebunden oder drahtlos, beispielsweise nach dem DECT-Standard, angeschlossen werden.

In der Regel sind die internen Kommunikationsendgeräte und die Nebenstellenanlage räumlich getrennt und deshalb über geeignete Installationskabel oder über Funkverteilnetze (z. B. nach dem DECT-Standard) miteinander verbunden. In den vergangenen Jahren haben auch Nebenstellenanlagen mit LAN-Anschlüssen sowohl für die Nutzung von IP-Telefonie als auch zur Vernetzung von mehreren Nebenstellenanlagen über das Internet an Popularität gewonnen.

An Stelle des Begriffs Telefonanlage oder Nebenstellenanlage werden häufig auch folgende Bezeichnungen verwendet: Telekommunikationsanlage (TK-Anlage), Telekommunikationssystem (TK-System), Teilnehmervermittlungsanlage, private branch exchange (PBX), private automatic branch exchange (PABX). Neben konventionellen Realisierungen von Nebenstellenanlagen existieren Internetbasierende private branch exchanges (Net-PBX), sog. Centrex-Lösungen (Central Office exchange), bei denen ein öffentlicher Telefonanbieter eine Telefonanlagen-Funktionalität zur Verfügung stellt, und auch rein auf Software-basierende, im Internet realisierte Nebenstellenanlagen auf der sog. Voice-over-IP-Technik.

Ein Kommunikationsendgerät im Sinne der vorliegenden Erfindung ist jede Einrichtung, über die ein Teilnehmer Telefongespräche führen kann. Hierzu zählen insbesondere stationäre Telefonendgeräte, mobile Telefone, Schnurlostelefone, sog. Personal Digital Assistants (PDAs), aber auch beispielsweise Notebooks mit einer entsprechenden Hardware-Ausstattung (Mikrofon) und ähnliche Geräte.

Unter einem internen Kommunikationsendgerät soll jedes Kommunikationsendgerät verstanden werden, das als Bestandteil der Nebenstellenanlage geführt wird und innerhalb der Nebenstellenanlage über eine interne Teilnehmernummer verfügt. Unter einem externen Kommunikationsendgerät soll hingegen jedes Kommunikationsendgerät verstanden werden, das nicht als internes Kommunikationsendgerät zu zählen ist.

Vorteilhafte Weiterbildungen der Erfindung sind Gegenstand von Unteransprüchen. Im Folgenden wird die Erfindung anhand bevorzugter Ausführungsbeispiele und mit Hilfe von Figuren näher beschrieben.

Dabei zeigt
Fig. 1 eine schematische Darstellung des grundsätzlichen Aufbaus einer erfindungsgemäßen Nebenstellenanlage und der innerhalb dieser Nebenstellenanlage Kommunikationsverbindung;
Fig. 2 ein bevorzugtes Ausführungsbeispiel einer Datenhaltung innerhalb einer Datenbank einer erfindungsgemäßen Nebenstellenanlage;
Fig. 3 einen Ablaufplan zur Assoziierung einer identifizierten Rufnummer eines externen Kommunikationsendgerätes in einer Datenbank mit einem internen Kommunikationsendgerät;
Fig. 4 einen Ablaufplan zur Aktivierung bzw. Deaktivierung einer Rufweiterleitung.

Bei dem erfindungsgemäßen Verfahren zur Einrichtung und Verwaltung einer Anbindung eines externen Kommunikationsendgerätes (eK, eK1, eK2) an eine Nebenstellenanlage (PBX) verfügt ein internes Kommunikationsendgerät (iK, iK1, iK2, iK3) der Nebenstellenanlage über mindestens eine Einrichtung (E, E11, E12, E21, E22, E31, E32), durch deren Aktivierung (act) dieses interne Kommunikationsendgerät oder die Nebenstellenanlage in einen Zustand versetzt wird, in welchem dieses interne Kommunikationsendgerät oder die Nebenstellenanlage die Rufnummer eines von einem externen Kommunikationsendgerät ankommenden Anrufs identifiziert und die identifizierte Rufnummer des externen Kommunikationsendgeräts in einer Datenbank (DB) mit dem internen Kommunikationsendgerät assoziiert, sofern die mit der Aktivierung dieser Einrichtung verbundene Art der Assoziation dieses externen Kommunikationsendgeräts mit diesem internen Kommunikationsendgerät in der Datenbank noch nicht eingetragen ist, und bei dem diese Assoziation anderenfalls gelöscht wird.

Vorzugsweise ist mindestens eine Einrichtung vorgesehen, deren Aktivierung eine Assoziation bewirkt, die eine Anrufweiterschaltung ankommender Anrufe für das interne Kommunikationsendgerät auf das assoziierte externe Kommunikationsendgerät bewirkt. Dabei wird vorzugsweise dasjenige externe Kommunikationsendgerät assoziiert, von welchem während der Aktivierung der entsprechenden Einrichtung oder vor der Aktivierung dieser Einrichtung ein ankommender Anruf für das interne Kommunikationsendgerät vorliegt. Dies sei an einem Beispiel erläutert:

Ein Teilnehmer einer Nebenstellenanlage möchte für sein internes Kommunikationsendgerät, also beispielsweise für sein zur Nebenstellenanlage gehörendes Festnetztelefon, eine Anrufweiterschaltung zu seinem Mobiltelefon einrichten. Um dies zu erreichen, ruft er von seinem Mobiltelefon aus sein zur Nebenstellenanlage gehörendes Festnetzendgerät an und drückt beispielsweise an diesem Festnetzendgerät eine entsprechende Taste. Das Drücken dieser Taste bewirkt nun, dass das mobile Kommunikationsendgerät dieses Teilnehmers in der Datenbank der Nebenstellenanlage mit seinem zur Nebenstellenanlage gehörenden Festnetztelefon in der Weise assoziiert wird, dass künftig für das zur Nebenstellenanlage gehörende Festnetztelefon ankommende Anrufe an sein mobiles Kommunikationsendgerät, das nicht zur Nebenstellenanlage gehört, weitergeleitet werden.

Die Erfindung ermöglicht in diesem Beispiel also eine sehr komfortable Art der Einrichtung einer Anrufweiterschaltung von einem internen Kommunikationsendgerät einer Nebenstellenanlage auf ein externes Kommunikationsendgerät, in diesem Fall ein mobiles Kommunikationsendgerät.

Die Erfindung ist jedoch keineswegs auf dieses Beispiel beschränkt. An Stelle einer Anrufweiterschaltung, die insbesondere die Leistungsmerkmale der Rufumleitung, also der sofortigen Umleitung eines ankommenden Telefongesprächs auf ein anderes Kommunikationsendgerät umfassen soll, können mit einer Assoziation eines internen Kommunikationsendgeräts einer Nebenstellenanlage mit einem externen Kommunikationsendgerät auch andere Leistungsmerkmale von Nebenstellenanlagen verbunden sein. Beispiele für solche Leistungsmerkmale sind die Merkmale "Rückruf bei besetzt" (CCBS, englische Abkürzung für Completion of Calls to Busy Subscriber) oder andere ähnliche Leistungsmerkmale. Innerhalb der Gruppe der Leistungsmerkmale die unter dem Oberbegriff "Anrufweiterschaltung" zusammengefasst werden (englisch Call Diversion) sind sämtliche Unterarten dieses Leistungsmerkmals als Realisierungsmöglichkeiten einer Assoziierung in der Datenbank möglich.

Anrufweiterschaltung (Call Diversion) ist dabei der Oberbegriff für verschiedene Ausprägungen von sog. Call-forwarding- und sog. "Call Deflection" Diensten: bei der sogenannten unbedingten Rufumleitung (Call Forwarding Unconditional) erfolgt die Umleitung in jedem Fall sofort. Bei der als "Call Forwarding Busy" bezeichneten Variante der Anrufweiterschaltung erfolgt die Umleitung nur, wenn der Zielteilnehmer besetzt ist. Bei der als "Call Forwarding On No Reply" bezeichneten Variante der Umleitung erfolgt diese Umleitung nur, wenn sich der Zielteilnehmer nach einer bestimmten Zeit, beispielsweise nach 15 Sekunden, nicht meldet.

Im Zusammenhang mit der vorliegenden Erfindung ist es auch möglich, eine als "Call Forwarding Parallel" bezeichnete Variante der Anrufweiterschaltung zu realisieren, bei der sowohl das interne Kommunikationsendgerät als auch das assoziierte externe Kommunikationsendgerät beide gleichzeitig klingeln, d. h. einen ankommenden Anruf dem Teilnehmer melden. Ferner sind auch die im Englischen häufig als Call Deflection bezeichneten Varianten der Anrufweiterschaltung mögliche Folgen einer erfindungsgemäßen Assoziation eines internen Kommunikationsendgerät und einem externen Kommunikationsendgerät, wobei sich die Call Deflection vom Call Forwarding dadurch unterscheidet, dass hier die Weiterleitung fallweise (per Anruf) eingeleitet wird und nicht fest konfiguriert zu einem bestimmten Ziel.

Bei einer bevorzugten Ausführungsform der Erfindung ist es vorgesehen, dem anrufenden Teilnehmer stets die interne Rufnummer des internen Kommunikationsendgeräts der Nebenstellenanlage zu signalisieren bzw. zu übermitteln und nicht die Rufnummer des externen Kommunikationsendgeräts, an welchen der ankommenden Anruf weitergeleitet wird.

Es ist aber auch möglich, dass andererseits bestimmten Teilnehmern die Rufnummer des externen Kommunikationsendgeräts angezeigt wird. Bei einer weiteren bevorzugten Ausführungsform der Erfindung wird die Anrufernummer eines anrufenden externen Kommunikationsendgeräts vor der Eintragung der Assoziation der Datenbank durch eine Verarbeitungseinrichtung der Nebenstellenanlage zu einer wählbaren Nummer aufbereitet. In vielen Fällen wird diese Aufbereitung in der Einfügung führender Nullen oder der Auslassung überflüssiger Bereichsnetzkennzahlen bestehen.

In der Fortsetzung der Beschreibung unseres bereits oben erwähnten Beispiels ist es erfindungsgemäß bevorzugt, die Nebenstellenanlage so einzurichten, dass eine Aktivierung einer Einrichtung (E11, ..., E32) eines internen Kommunikationsendgeräts zu einer Löschung der Assoziierung führt, wenn diese Einrichtung aktiviert wird, und wenn mit der internen Nummer des internen Kommunikationsendgeräts in Zusammenhang mit dieser Einrichtung bereits ein externes Kommunikationsendgerät assoziiert ist. In diesem Fall wird die Assoziierung gelöscht.

Will also unser oben beschriebener Teilnehmer beispielsweise die Rufumleitung zu seinem mobilen Kommunikationsendgerät deaktivieren, drückt er einfach die Taste erneut, mit der er zuvor während eines ankommenden Anrufs von seinem mobilen Endgerät die Rufumleitung aktiviert hat, was zur Deaktivierung der Rufumleitung führt.

Anhand dieses einfachen Beispiels wird bereits deutlich, in welcher Weise die vorliegenden Erfindung eine äußerst effiziente und benutzerfreundliche Einrichtung und Verwaltung einer Anbindung externer Kommunikationsendgeräte an eine Nebenstellenanlage ermöglicht.

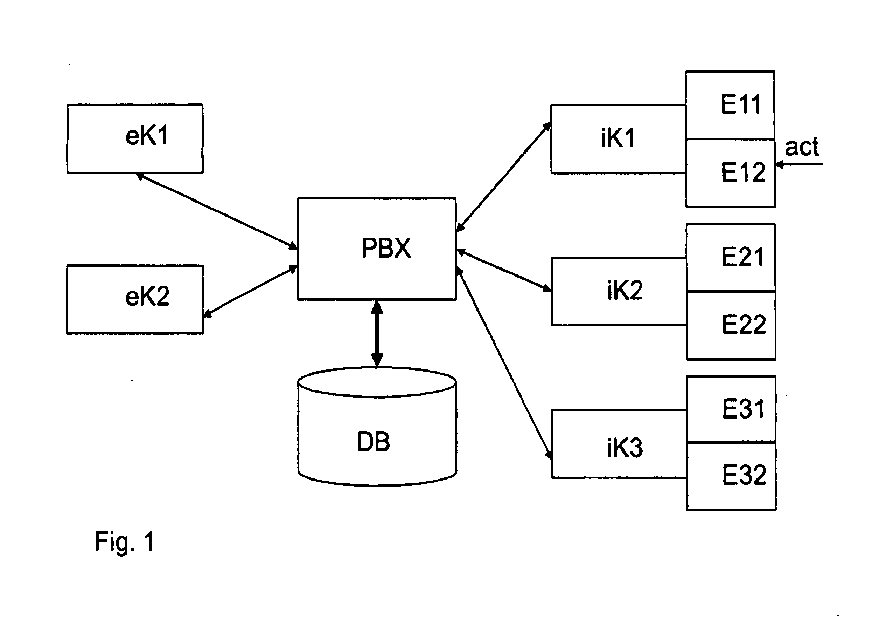

Fig. 1 zeigt einen prinzipiellen Aufbau einer erfindungsgemäßen Nebenstellenanlage an einem bevorzugten Ausführungsbeispiel. Die Nebenstellenanlage (PBX) verfügt über eine Datenbank (DB) und in diesem Fall drei interne Kommunikationsendgeräte iK1, iK2, iK3, mit in diesem Fall jeweils zwei Einrichtungen zur Aktivierung einer Assoziation E11, E12, E21, E22, E31, E32. Die Aktivierung (act) der Einrichtung E12 des internen Kommunikationsendgeräts iK1 bewirkt die Assoziation eines externen Kommunikationsendgerätes (eK) falls vor der Aktivierung dieser Einrichtung oder während der Aktivierung dieser Einrichtung ein ankommender Anruf von diesem externen Kommunikationsendgerät vorliegt.

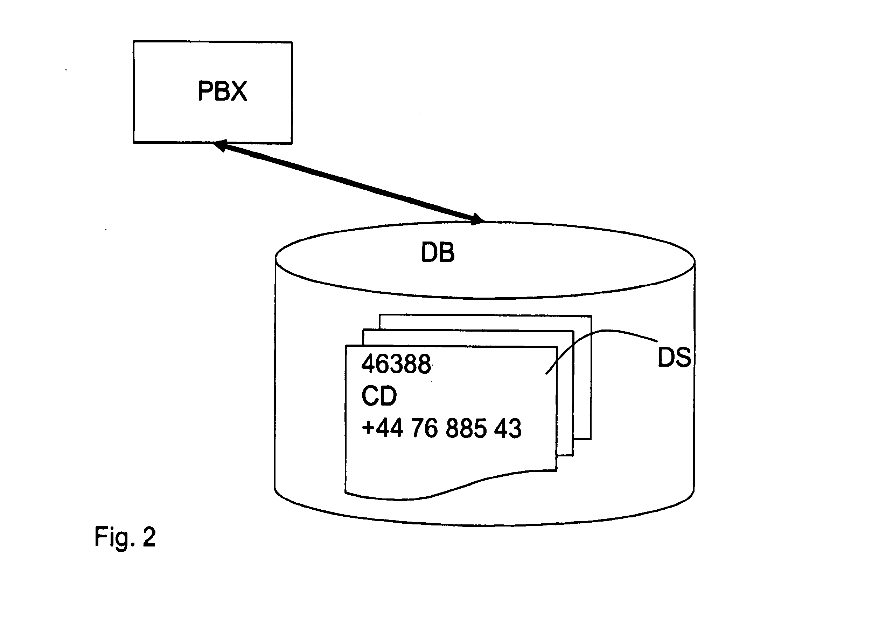

Wie in Fig. 2 schematisch gezeigt, findet die Assoziation bevorzugt durch einen entsprechenden Eintrag in die Datenbank (DB) der Nebenstellenanlage (PBX) statt, die beispielsweise für jede Assoziation einen Datensatz (DS) vorsieht, welcher einem internen Kommunikationsendgerät, beispielsweise mit der internen Teilnehmemummer 46388, ein Leistungsmerkmal, in diesem Fall die Anrufweiterschaltung (CD) und ein mit diesem internen Kommunikationsendgerät assoziierte externes Kommunikationsendgerät, in diesem Fall mit der Teilnehmernummer +447688543, vorsieht.

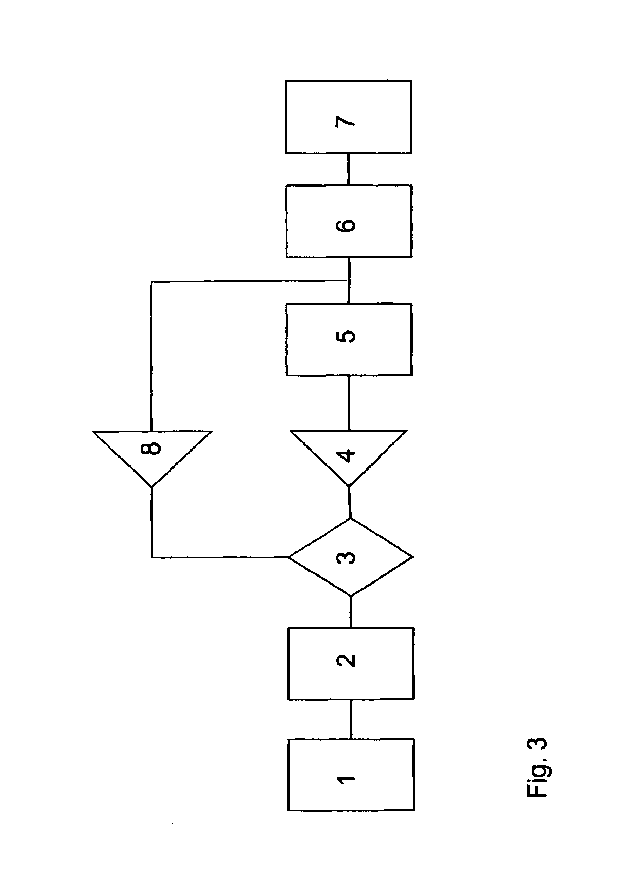

Wie in Fig. 3 beispielhaft dargestellt ist, kann eine Assoziierung einer identifizierten Rufnummer eines externen Kommunikationsendgeräts in einer Datenbank (DB) mit einem internen Kommunikationsgerät in folgenden Schritten ablaufen: Wenn in einem ersten Schritt beispielsweise eine entsprechende taste eines internen Kommunikationsendgerätes entsprechend programmiert wurde (1), kann diese Taste in einem zweiten Schritt (2) durch einen Teilnehmer betätigt werden. Falls die Anlage entsprechend programmiert ist ("Mobilitätsmerkmal aktiviert" = Ja; 4), was in einem dritten Schritt (3) abgefragt oder geprüft werden kann, wird ein vorhandener älterer Eintrag in der Datenbank gelöscht (5) und eine identifizierte neue Rufnummer wird in die Datenbank eingetragen (6). Andernfalls ("Mobilitätsmerkmal aktiviert" = Nein; 8), entfällt der Schritt des Löschens des älteren Eintrags (5) und die Eintragung der identifizierten neuen Rufnummer kann sofort erfolgen (6). Der Ruf, dessen Rufnummer identifiziert wurde, kann daraufhin beendet werden (7).

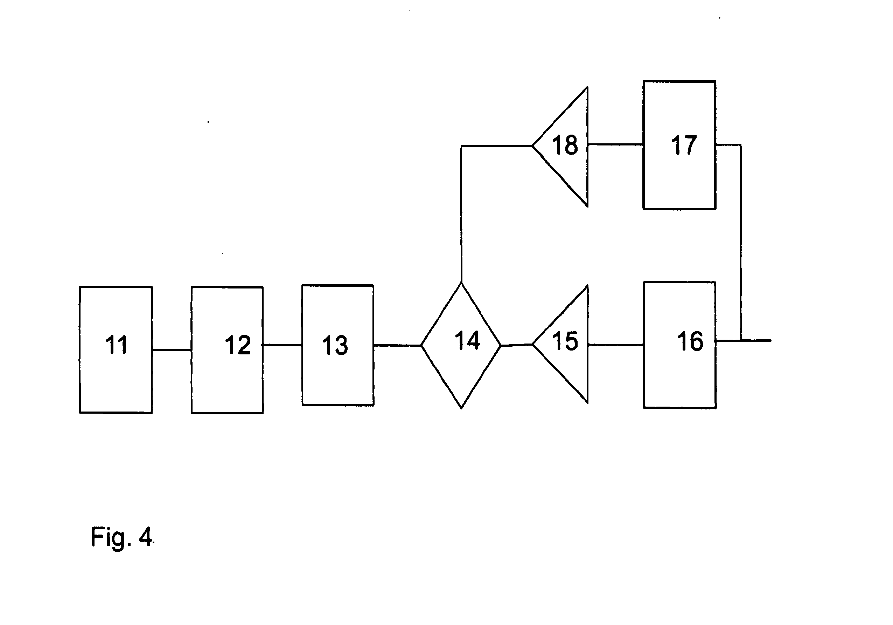

Die Aktivierung oder Deaktivierung des Mobilitätsmerkmals kann in einer Folge von Schritten erfolgen, die in Fig. 4 schematisch dargestellt ist: Bei entsprechend programmierter Umgebung (11), in der beispielsweise eine Taste (E11) eines internen Kommunikationsendgerätes (iK1) entsprechend programmiert ist, betätigt (12) ein Teilnehmer diese Taste. Es wir festgestellt (13), dass kein ankommender Ruf vorliegt, dessen Rufnummer identifiziert werden könnte. Erfolgt nun die Prüfung (14), ob das Mobilitätsmerkmal aktiviert ist, positiv (15), wird das Mobilitätsmerkmal deaktiviert (16); andernfalls (18) wird es aktiviert (17).

## Patentansprüche

1. Verfahren zur Einrichtung und Verwaltung einer Anbindung eines externen Kommunikationsendgeräts (eK) an eine Nebenstellenanlage (PBX), bei dem ein internes Kommunikationsendgerät (iK) der Nebenstellenanlage über mindestens eine Einrichtung (E) verfügt, durch deren Aktivierung dieses interne Kommunikationsendgerät oder die Nebenstellenanlage in einen Zustand versetzt wird, in welchem dieses interne Kommunikationsendgerät oder die Nebenstellenanlage die Rufnummer eines von einem externen Kommunikationsendgerät ankommenden Anrufs identifiziert und die identifizierte Rufnummer des externen Kommunikationsendgeräts in einer Datenbank (DB) mit dem internen Kommunikationsgerät assoziiert, sofern die mit der Aktivierung dieser Einrichtung verbundene Art der Assoziation dieses externen Kommunikationsendgeräts mit diesem internen Kommunikationsendgerät in der Datenbank noch nicht eingetragen ist, und bei dem diese Assoziation anderenfalls gelöscht wird.

2. Verfahren nach Anspruch 1, bei dem eine Art der Assoziation vorgesehen ist, die eine Anrufweiterschaltung ankommender Anrufe für das interne Kommunikationsendgerät auf das externe Kommunikationsendgerät bewirkt.

3. Verfahren nach einem der vorhergehenden Ansprüche, bei dem eine Aktivierung mindestens einer Einrichtung während oder nach einem ankommenden Anruf eine Assoziation dieses externen Kommunikationsendgeräts mit diesem internen Kommunikationsendgerät bewirkt.

4. Verfahren nach einem der vorhergehenden Ansprüche, bei dem die AnruferNummer eines anrufenden externen Kommunikationsendgerätes vor der Eintragung Assoziation in der Datenbank durch eine Verarbeitungseinrichtung (VE) der Nebenstellenanlage zu einer wählbaren Nummer aufbereitet wird.

5. Nebenstellenanlage (PBX) mit mindestens einem internen Kommunikationsendgerät (iK) mit mindestens einer Einrichtung (E), durch deren Aktivierung dieses interne Kommunikationsendgerät oder die Nebenstellenanlage in
einen Zustand versetzt wird, in welchem dieses interne Kommunikationsendgerät oder die Nebenstellenanlage die Rufnummer eines von einem externen Kommunikationsendgerät (eK) ankommenden Anrufs identifiziert und die identifizierten Rufnummer des externen Kommunikationsendgeräts in einer Datenbank (DB) mit dem internen Kommunikationsgerät assoziiert, sofern die mit der Aktivierung dieser Einrichtung verbundene Art der Assoziation dieses externen Kommunikationsendgeräts mit diesem internen Kommunikationsendgerät in der Datenbank noch nicht eingetragen ist, und bei dem diese Assoziation andernfalls gelöscht wird.

6. Nebenstellenanlage nach Anspruch 5, bei der eine Art der Assoziation vorgesehen ist, die eine Anrufweiterschaltung ankommender Anrufe für das interne Kommunikationsendgerät auf das externe Kommunikationsendgerät bewirkt.

7. Nebenstellenanlage nach einem der Ansprüche 5 oder 6, bei der eine Aktivierung mindestens einer Einrichtung während oder nach einem ankommenden Anruf eine Assoziation dieses externen Kommunikationsendgeräts mit diesem internen Kommunikationsendgerät bewirkt.

8. Nebenstellenanlage nach einem der Ansprüche 5 bis 7, bei der die AnruferNummer eines anrufenden externen Kommunikationsendgerätes vor der Eintragung Assoziation in der Datenbank durch eine Verarbeitungseinrichtung (VE) der Nebenstellenanlage zu einer wählbaren Nummer aufbereitet wird.

9. Internes Kommunikationsendgerät eingerichtet zum Betrieb in einer Nebenstellenanlage nach einem der Ansprüche 5 bis 8.

## Claims

1. Method for establishing and managing a connection of an external communication terminal (eK) to a private branch exchange (PBX), in which an internal communication terminal (iK) of the private branch exchange has at least one device (E), by means of the activation of which said internal communication terminal or the private branch exchange is put into a state in which said internal communication terminal or the private branch exchange identifies the telephone number of an incoming call from an external communication terminal and associates the identified telephone number of the external communication terminal with the internal communication terminal in a database (DB), provided that the type of the association of said external communication terminal with said internal communication terminal connected with the activation of said device is not yet entered in the database, and in which said association is otherwise deleted.

2. Method according to claim 1, in which a type of association is provided which effects a call forwarding of incoming calls for the internal communication terminal to the external communication terminal.

3. Method according to any one of the preceding claims, in which an activation of at least one device during or after an incoming call effects an association of said external communication terminal with said internal communication terminal.

4. Method according to any one of the preceding claims, in which the caller number of a calling external communication terminal is preprocessed, prior to entering the association in the database, by a processing device (VE) of the private branch exchange to become a diallable number.

5. Private branch exchange (PBX) with at least one internal communication terminal (iK) with at least one device (E), by means of the activation of which said internal communication terminal or the private branch exchange is put into a state in which said internal communication terminal or the private branch exchange identifies the telephone number of an incoming call from an external communication terminal (eK) and associates the identified telephone number of the external communication terminal with the internal communication device in a database (DB), provided that the type of the association of said external communication terminal with said internal communication terminal connected with the activation of said device is not yet entered in the database, and in which said association is otherwise deleted.

6. Private branch exchange according to claim 5, in which a type of association is provided which effects a call forwarding of incoming calls for the internal communication terminal to the external communication terminal.

7. Private branch exchange according to any one of claims 5 or 6, in which an activation of at least one device during or after an incoming call effects an association of said external communication terminal with said internal communication terminal.

8. Private branch exchange according to any one of claims 5 to 7, in which the caller number of a calling external communication terminal is preprocessed, prior entering the association in the database, by a processing device (VE) of the private branch exchange to become a diallable number.

9. Internal communication terminal, set up for operation in a private branch exchange according to any one of claims 5 to 8.

## Revendications

1. Procédé destiné à l'établissement et la gestion d'une connexion d'un terminal de communication externe (eK) à un autocommutateur privé (PBX), selon lequel un terminal de communication interne (IK) de l'autocommutateur privé dispose d'au moins un système (E) par l'activation duquel ce terminal de communication interne ou l'autocommutateur privé est passé dans un état dans lequel ce terminal de communication interne ou l'autocommutateur privé identifie le numéro d'appel d'un appel arrivant du terminal de communication externe et le numéro d'appel identifié du terminal de communication externe est associé dans une banque de données (DB) au terminal de communication interne dans la mesure où le type de l'association, lié à l'activation de ce système, de ce terminal de communication externe avec ce terminal de communication interne n'est pas encore inscrit dans la banque de données, et selon lequel cette association est sinon supprimée.

2. Procédé selon la revendication 1, selon lequel il est prévu un type de l'association qui provoque un transfert des appels arrivants destinés au terminal de communication interne vers le terminal de communication externe.

3. Procédé selon l'une quelconque des revendications précédentes, selon lequel une activation d'au moins un système durant ou après un appel arrivant provoque une association de ce terminal de communication externe avec ce terminal de communication interne.

4. Procédé selon l'une quelconque des revendications précédentes, selon lequel, avant l'inscription de l'association dans la banque de données, le numéro d'appelant d'un terminal de communication externe appelant est traité par un système de traitement (VE) de l'autocommutateur privé en un numéro composable.

5. Autocommutateur privé (PBX) pourvu d'au moins un terminal de communication interne (IK) ayant au moins un système (E) par l'activation duquel ce terminal de communication interne ou l'autocommutateur privé est passé dans un état dans lequel ce terminal de communication interne ou l'autocommutateur privé identifie le numéro d'appel d'un appel arrivant d'un terminal de communication externe (eK) et le numéro d'appel identifié du terminal de communication externe est associé dans une banque de données (DB) avec le terminal de communication interne, dans la mesure où le type de l'association, lié à l'activation de ce système, de ce terminal de communication externe avec ce terminal de communication interne n'est pas encore inscrit dans la banque de données, et selon lequel cette association est sinon supprimée.

6. Autocommutateur privé selon la revendication 5, dans lequel il est prévu un type de l'association qui provoque un transfert des appels arrivants destinés au terminal de communication interne vers le terminal de communication externe.

7. Autocommutateur privé selon l'une quelconque des revendications 5 ou 6, dans lequel une activation d'au moins un système durant ou après un appel arrivant provoque une association de ce terminal de communication externe avec ce terminal de communication interne.

8. Autocommutateur privé selon l'une quelconque des revendications 5 à 7, dans lequel, avant l'inscription de l'association dans la banque de données, le numéro d'appelant d'un terminal de communication externe appelant est traité par un système de traitement (VE) de l'autocommutateur privé en un numéro composable.

9. Terminal de communication interne configuré pour fonctionner dans un autocommutateur privé selon l'une des revendications 5 à 8.
